(19) Europäisches Patentamt
European Patent Office
Office européen des brevets

(11) **EP 4 038 242 B1**

(12) **EUROPEAN PATENT SPECIFICATION**

(45) Date of publication and mention
of the grant of the patent:
**25.10.2023 Bulletin 2023/43**

(21) Application number: **20792834.2**

(22) Date of filing: **30.09.2020**

(51) International Patent Classification (IPC):
***E02F 9/20*** *(2006.01)*

(52) Cooperative Patent Classification (CPC):
**E02F 9/2054**

(86) International application number:
**PCT/US2020/053359**

(87) International publication number:
**WO 2021/067327 (08.04.2021 Gazette 2021/14)**

(54) **DETERMINATION OF A UNIFYING PRODUCTION METRIC**

BESTIMMUNG EINER VEREINHEITLICHENDEN PRODUKTIONSMETRIK

DÉTERMINATION D'UNE MESURE DE PRODUCTION D'UNIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2019 US 201916589696**

(43) Date of publication of application:
**10.08.2022 Bulletin 2022/32**

(73) Proprietor: **Caterpillar Inc.**
**Peoria, IL 61629-9510 (US)**

(72) Inventors:
• **BRICKNER, Chad T.**
**Dunlap, Illinois 61525 (US)**

• **DECLERK, Allen J.**
**Princeton, IL 61356 (US)**
• **BOMER, Bradley K.**
**Pekin, Illinois 61554 (US)**
• **WHITING, Mark W.**
**Peru, Illinois 61354 (US)**

(74) Representative: **Boult Wade Tennant LLP**
**Salisbury Square House**
**8 Salisbury Square**
**London EC4Y 8AP (GB)**

(56) References cited:
**SE-A1- 1 530 129       US-A1- 2017 342 684
US-A1- 2018 137 446       US-A1- 2019 055 715
US-A1- 2019 080 525**

EP 4 038 242 B1

**Description**

Technical Field

The present disclosure relates to systems and methods for creating and presenting a unifying production metric between a plurality of machines operating within a worksite on a mass excavation project as defined by a worksite plan. More specifically, the present disclosure relates to systems and methods including the plurality of machines that perform different tasks and report different production metrics based on the capabilities and functions of the machine, and a controller that may receive the different production metrics and create the unifying production metric to indicate a percentage or level of completion of the overall worksite plan.

Background

Haul trucks, wheel loaders, skid steer loaders, dozers, and other machines are often used to perform a variety of tasks at a worksite. These digging units, loading units, hauling units, material spreading units, grading units, and compacting units, among other types of machines, are used to excavate and prepare an area of ground for further development and building. For example, one or more hydraulic excavators, may be used to remove a layer of material such as soil, gravel, concrete, asphalt, or other material making up part of a work surface at the worksite. In some examples, an articulated truck or on-highway truck may be used as a hauling unit to move the material excavated by the hydraulic excavators away from or to the worksite. Further, in some examples, a track type tractor (TTT) may be used to create an elevation, slope, and grade of the material along a surface of the worksite. Even still further, a soil compactor acting as a compacting unit may be sued to compact the material to a desired density of the material. In some examples, a finish grade may be applied to the material across the worksite. The process using the machines described above may be referred to herein as mass excavation. In the above examples, the machines may be controlled (e.g., manually by an operator, semi-autonomously, fully-autonomously, among other modes of operation) to traverse the surface of the worksite as they perform a plurality of tasks associated with the worksite plan. Each of the types of machines used in the mass excavation may report production metrics of different types. However, these different production metrics for the different machines are not useful in reporting an overall completion percentage or level of the worksite plan in which the machines complete a plurality of different tasks. Further, because the different machines report different production metrics, it may be difficult to obtain insight into which machines within the worksite are underperforming within the overall worksite plan. This is because differing production metrics cannot be practically compared since they are thought to be incomparable or incommensurable metrics.

An example system for the use of location and load monitoring to track loads of material is described in US 2019/080525. In particular, US 2019/080525 describes a mobile machine that includes a load carrying mechanism configured to carry a load of material during operation of the mobile machine at a worksite. As explained in US 2019/080525, material and machine movement is tracked in order to estimate how much of the worksite operation is completed. Outputs from a machine within the system includes an indication of an amount of material moved including dump and dig cycle, material leaving and/or added to the worksite, and movement of stockpiles of the material. US 2019/080525 does not, however, describe a system configured to determine how much of the worksite operation is completed based on a unifying production metric that may measure productivity across different types of machines. US 2018/137446 A1 discloses a construction management system and construction management method. US 2017/342684 A1 discloses a multi-vehicle grade control system and method. SE 1 530 129 discloses a system for optimal utilization of substance transport units and substance moving units within a geographically defined area.

Example embodiments of the present disclosure are directed toward overcoming the deficiencies described above.

Summary

In an example embodiment of the present disclosure, a method includes receiving, with a controller, a worksite plan to be executed by at least a first machine and a second machine at a worksite, and assigning, with the controller, the first machine and the second machine to implement the worksite plan based on first capabilities of the first machine and second capabilities of the second machine. A first sensor of the first machine determines parameters indicative of a first production metric during execution of a first task, and a second sensor of the second machine determines parameters indicative of a second production metric different from the first production metric during execution of a second task different from the first task. The method also includes receiving, with the controller, first machine telematics data corresponding to the first task and associating the first telematics data with the first production metric from the first machine within a segmented portion of the worksite. Further, the method includes receiving, with the controller, second machine telematics data corresponding to the second task and associating the second telematics data with the second production metric from the second machine within the segmented portion of the worksite. Still further, the method includes defining, with the controller, a percentage of completion of the worksite plan based on a unifying production metric, the unifying production metric being determined based on the first production metric and the second production metric. Even still further, the method includes presenting, with the controller and on a user interface, an indication of the percentage of completion of the worksite plan based on the unifying production metric.

In another example embodiment of the present disclosure, a system includes a controller, a first machine operable at a worksite, a second machine operable at the worksite, and a communication network configured to transmit signals between the controller and the first machine and the second machine. The controller is configured to receive, from a first sensor associated with the first machine, parameters indicative of a first production metric during execution of a first task as defined by a worksite plan. The controller is also configured to receive, from a second sensor associated with the second machine, parameters indicative of a second production metric during execution of the second task, the second task being different from the first task and the second production metric being different from the first production metric. Still further, the controller is configured to present, on a user interface, and indication of a level of completion of the worksite plan based on a unifying production metric, the unifying production metric being defined by at least one of user input used to create the worksite plan, at least one dimension of a first material-moving device of the first machine, at least one dimension of a second material-moving device of the second machine, location data obtained from the first machine during execution of the first task, and location data obtained from the second machine during execution of the second task.

In yet another example embodiment of the present disclosure, a system includes a controller configured to receive a worksite plan to be executed by at least a first machine and a second machine located at a worksite, transmit instructions to the first machine to perform a first task defined by the worksite plan, and transmit instructions to the second machine to perform a second task defined by the worksite plan, the second task being different from the first task. The controller is also configured to receive, from a first sensor associated with the first machine, a first production metric during execution of the first task, and receive, from a second sensor associated with the second machine, a second production metric during execution of the second task, the second production metric being different from the first production metric. The controller is also configured to define a percentage of completion of the worksite plan based on a unifying production metric, the unifying production metric being determined based at least in part on the first production metric, the second production metric, a first dimension of a material-moving element of the first machine, and a second dimension of a material-moving element of the second machine.

Brief Description of Drawings

FIG. 1 is a schematic illustration of a system in accordance with an example embodiment of the present disclosure.
FIG. 2 is a flow chart depicting an example method associated with the system shown in FIG. 1.
FIG. 3 is a flow chart depicting an example method associated with the systems and methods shown in FIGS. 1 and 2.

Detailed Description

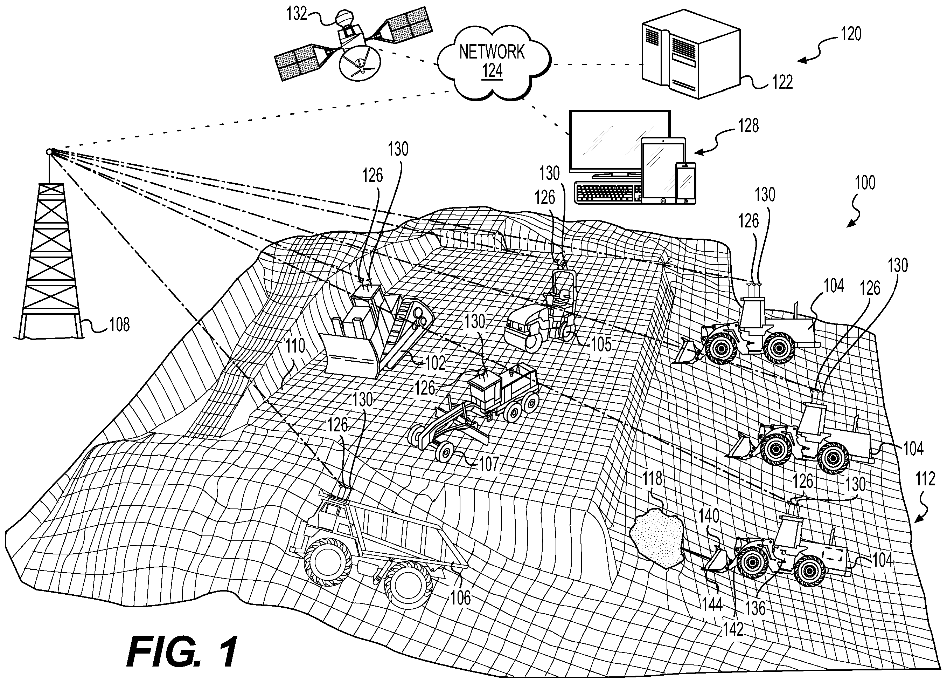

Wherever possible, the same reference numbers will be used throughout the drawings to refer to the same or like parts. Referring to FIG. 1, an example system 100 may include one or more machines operating at a worksite 112 to perform various tasks. For example, the system 100 may include one or more digging machines 102, one or more loading machines 104, one or more hauling machines 106, one or more compacting machines 105, one or more grading machines 107 and/or other types of machines used for construction, mining, paving, excavation, and/or other operations at the worksite 112. Each of the machines described herein may be in communication with each other and/or with a local or remote control system 120 by way of one or more central stations 108. The central station 108 may facilitate wireless communication between the machines described herein and/or between such machines and, for example, a system controller 122 of the control system 120, for the purpose of transmitting and/or receiving operational data and/or instructions.

A digging machine 102 may refer to any machine that reduces material at the worksite 112 for the purpose of subsequent operations (i.e., for blasting, loading, hauling, and/or other operations). Examples of digging machines 102 may include excavators, backhoes, dozers, drilling machines, trenchers, and drag lines, among other types of digging machines. Multiple digging machines 102 may be co-located within a common area at the worksite 112 and may perform similar functions. For example, one or more of the digging machines may move soil, sand, minerals, gravel, concrete, asphalt, overburden, and/or other material comprising at least part of a work surface 110 of the worksite 112. As such, under normal conditions, similar co-located digging machines 102 may perform about the same with respect to productivity and efficiency when exposed to similar site conditions.

A loading machine 104 may refer to any machine that lifts, carries, loads, and/or removes material that has been reduced by one or more of the digging machines 102. In some examples, a loading machine 104 may remove such material, and may transport the removed material from a first location at the worksite 112 to a second location at the worksite 112 or off or onto the worksite. Examples of a loading machine 104 may include a wheeled or tracked loader, a front shovel, an excavator, a cable shovel, and a stack reclaimer, among other types of loading machines 104. One or more loading machines 104 may operate within common areas of worksite 112 to, for example, load reduced materials onto a hauling machine 106.

A hauling machine 106 may refer to any machine that carries the excavated materials between different locations within worksite 112. Examples of hauling machines 106 may include an articulated truck, an off-highway truck, an on-highway dump truck, and a wheel tractor scraper, among other types of hauling machines 106. Laden hauling machines 106 may carry overburden from areas of excavation within worksite 112, along haul roads to various dump sites, and return to the same or different excavation areas to be loaded again. Under normal conditions, similar co-located hauling machines 106 may perform about the same with respect to productivity and efficiency when exposed to similar site conditions.

A compacting machine 105 may refer to any machine that is configured to apply stress on a work surface 110 of the worksite 112 and cause densification of soil thereon and/or obtains an acceptable surface finish. An operation of the soil compacting machine 105 may immediately follow operation of a soil grading machine 107 and/or may immediately proceed operation of a soil grading machine 107. In one example, the compacting process may be performed with a compacting machine 105 such as a double drum compacting machines, having a front drum and a back drum, which serve to propel the machine and compact the material to a suitable state via the weight of the compacting machine, and may be used in cooperation with drum vibrating apparatuses. Other examples of soil compacting machines 105 may include a wheeled or tracked soil compactor, a vibratory soil compactor, and a tandem vibratory compactor among other types of compacting machines 105. One or more soil compacting machines 105 may co-operate within the worksite 112 to compact soil thereon. Completing compaction may include multiple passes across the material with the compacting machine.

A grading machine 107 may refer to any machine that is configured to create a flat surface by grading material such as soil at the worksite 112 for subsequent operations, for example, for a compacting operation. Examples of soil grading machines 107 may include scrapers, bulldozers, motor graders or other similar machines commonly known in the art to create a flat surface during operation. Multiple soil grading machines 107 may be co-located within a common area of the worksite 112 and may perform similar functions.

With continued reference to FIG. 1, the system 100 may include a control system 120 and a system controller 122 to control and/or coordinate between various elements within the system 100. In some examples the control system 120 and/or the system controller 122 may be located at a command center (not shown) remote from the worksite 112. In other examples, the system controller 122 and/or one or more components of the control system 120 may be located at the worksite 112. Regardless of the location of the various components of the control system 120, such components may be configured to facilitate communications between, and to provide information to, the digging machines 102, loading machines 104, hauling machines 106, compacting machines 105, grading machines 107, and/or other machines of the system 100. In any of the examples described herein, the functionality of the system controller 122 may be distributed so that certain operations are performed at the worksite 112 and other operations are performed remotely such as, for example, at the remote command center noted above. For example, some operations of the system controller 122 may be performed at the worksite 112, on one or more of the digging machines 102, one or more of the loading machines 104, one or more of the hauling machines 106, one or more of the compacting machines 105, or one or more of the grading machines 107, among other locations and devices of the system 100. It is understood that the system controller 122 may comprise a component of the system 100, a component of one or more of the machines disposed at the worksite 112, a component of a separate mobile device such as, for example, a mobile phone, a tablet, and a laptop computer, among other types of mobile devices, and/or the control system 120.

The system controller 122 may be an electronic controller that operates in a logical fashion to perform operations, execute control algorithms, store and retrieve data, and other desired operations. The system controller 122 may include and/or access memory, secondary storage devices, processors, and any other components for running an application. The memory and secondary storage devices may be in the form of read-only memory (ROM) or random access memory (RAM) or integrated circuitry that is accessible by the controller. Various other circuits may be associated with the system controller 122 such as power supply circuitry, signal conditioning circuitry, driver circuitry, and other types of circuitry.

The system controller 122 may be a single controller or may include more than one controller. In examples where the system controller 122 includes more than one controller, the system controller 122 may, for example, include additional controllers associated with each of the digging machines 102, loading machines 104, hauling machines 106, compacting machines 105, grading machines 107, and/or other machines of the system 100 configured to control various functions and/or features of the system 100. As used herein, the term "controller" is meant in its broadest sense to include one or more controllers, processors, central processing units, and/or microprocessors that may be associated with the system 100, and that may cooperate in controlling various functions and operations of the machines included in the system 100. The functionality of the system controller 122 may be implemented in hardware and/or software without regard to the functionality. The system controller 122 may rely on one or more data maps, look-up tables, neural networks, algorithms, machine learning algorithms, and/or other components relating to the operating conditions and the operating environment of the system 100 that may be stored in the memory of the system controller 122. Each of the data maps noted above may include a collection of data in the form of tables, graphs, and/or equations to maximize the performance and efficiency of the system 100 and its operation.

The components of the control system 120 may be in communication with and/or otherwise operably connected to any of the components of the system 100 via a network 124. The network 124 may be a local area network ("LAN"), a larger network such as a wide area network ("WAN"), or a collection of networks, such as the Internet. Protocols for network communication, such as TCP/IP, may be used to implement the network 124. Although embodiments are described herein as using a network 124 such as the Internet, other distribution techniques may be implemented that transmit information via memory cards, flash memory, or other portable memory devices.

It is also understood that the digging machines 102, loading machines 104, hauling machines 106, compacting machine 105, grading machine 107, and/or other machines of the system 100 may include respective controllers, and each of the respective controllers described herein (including the system controller 122) may be in communication and/or may otherwise be operably connected via the network 124. For example, the network 124 may comprise a component of a wireless communication system of the system 100, and as part of such a wireless communication system, the digging machines 102, loading machines 104, hauling machines 106, compacting machines 105, grading machines 107, and/or other machines of the system 100 may include respective communication devices 126. Such communication devices 126 may be configured to permit wireless transmission of a plurality of signals, instructions, and/or information between the system controller 122 and the respective controllers of the digging machines 102, loading machines 104, hauling machines 106, compacting machines 105, grading machines 107, and/or other machines of the system 100. Such communication devices 126 may also be configured to permit communication with other machines and systems remote from the worksite 112. For example, such communication devices 126 may include a transmitter configured to transmit signals (e.g., via the central station 108 and over the network 124) to a receiver of one or more other such communication devices 126. In such examples, each communication device 126 may also include a receiver configured to receive such signals (e.g., via the central station 108 and over the network 124). In some examples, the transmitter and the receiver of a particular communication device 126 may be combined as a transceiver or other such component. In any of the examples described herein, such communication devices 126 may also enable communication (e.g., via the central station 108 and over the network 124) with one or more tablets, computers, cellular/wireless telephones, personal digital assistants, mobile devices, or other electronic devices 128 located at the worksite 112 and/or remote from the worksite 112. Such electronic devices 128 may comprise, for example, mobile phones and/or tablets of project managers (e.g., foremen) overseeing daily operations at the worksite 112 or at a non-line-of-sight (NLOS) location with respect to the worksite 112. As used herein and in the appended claims, the term "non-line-of-sight (NLOS)" is meant to be understood broadly as any location with respect to the worksite 112 that is obstructed by a physical object such that electromagnetic waves cannot propagate between the location and the worksite 112.

The network 124, communication devices 126, and/or other components of the wireless communication system described above may implement or utilize any desired system or protocol including any of a plurality of communications standards. The desired protocols will permit communication between the system controller 122, one or more of the communication devices 126, and/or any other desired machines or components of the system 100. Examples of wireless communications systems or protocols that may be used by the system 100 described herein include a wireless personal area network such as Bluetooth RTM. (e.g., IEEE 802.15), a local area network such as IEEE 802.11b or 802.11g, a cellular network, or any other system or protocol for data transfer. Other wireless communication systems and configurations are contemplated. In some instances, wireless communications may be transmitted and received directly between the control system 120 and a machine (e.g., the digging machines 102, loading machines 104, hauling machines 106, compacting machines 105, grading machines 107, among other machines described herein) of the system 100 or between such machines. In other instances, the communications may be automatically routed without the need for retransmission by remote personnel.

In example embodiments, one or more machines of the system 100 (e.g., the digging machines 102, loading machines 104, hauling machines 106, compacting machines 105, grading machines 107, among other machines described herein) may include a location sensor 130 configured to determine a location, speed, heading, and/or orientation of the respective machine. In such embodiments, the communication device 126 of the respective machine may be configured to generate and/or transmit signals indicative of such determined locations, speeds, headings, orientations, haul distances, and/or area covered, to, for example, the system controller 122 and/or to the other respective machines of the system 100. In some examples, the location sensors 130 of the respective machines may include and/or comprise a component of global navigation satellite system (GNSS) or a global positioning system (GPS). Alternatively, universal total stations (UTS) may be utilized to locate respective positions of the machines. In example embodiments, one or more of the location sensors 130 described herein may comprise a GPS receiver, transmitter, transceiver, laser prisms, and/or other such device, and the location sensor 130 may be in communication with one or more GPS satellites 132 and/or UTS to determine a respective location of the machine to which the location sensor 130 is connected continuously, substantially continuously, or at various time intervals. One or more additional machines of the system 100 may also be in communication with the one or more GPS satellites 132 and/or UTS, and such GPS satellites 132 and/or UTS may also be configured to determine respective locations of such additional machines. In any of the examples described herein, machine locations, speeds, headings, orientations, and/or other parameters determined by the respective location sensors 130 may be used by the system controller 122 and/or other components of the system 100 to coordinate activities of the digging machines 102, loading machines 104, hauling machines 106, compacting machines 105, grading machines 107, and/or other components of the system 100.

The GPS satellites 132 and/or UTS may be used to receive machine data from the digging machines 102, loading machines 104, hauling machines 106, compacting machines 105, grading machines 107, and/or other machines of the system 100. Further, the GPS satellites 132 and/or UTS may be used to transmit that machine data to the system controller 122 or other data processing device or system within the system 100. The machine data may include production metrics from the digging machines 102, loading machines 104, hauling machines 106, compacting machines 105, grading machines 107, and/or other machines performing tasks within the worksite 112 of the system 100 and according to the worksite plan provided by, for example, the system controller 122 or another source.

The machine data may be machine telematics data that includes, for example, a location of the machines, utilization data that defines the manner, location, duration, and functions used by the machines, specifications of the machines, the health of the machines, and other telematics data. Telematics, as used herein, means the complete measuring, transmitting, and receiving of data defining a value of a quantity at a distance, by electrical translating means such as a wired or wireless communication network including the network 124. Further, in one example, the telematics data may also include a unique identifier for each of the machines 102, 104, 105, 106, 107. In one example, the telematics data may include data representing levels of completion of tasks assigned to each of the machines within the worksite plan, and may be represented using amounts of material such as soil 118 that is interacted with by the machines 102, 104, 105, 106, 107. For example, the digging machines 102 may reduce the soil 118 for the purpose of loading the soil into, for example, the hauling machines 106 by the loading machines 104 for removal from or conveyance to the worksite 112. In so doing, respective sensors 130, controllers 136, and communication devices 126 associated with the machines 102, 104, 105, 106, 107 may sense, measure, process, and transmit data representing the amount of soil 118 the digging machines 102 reduce in volume (e.g., cubic meters ($m^3$)) or mass (e.g., metric tons (t)), the area of the worksite 112 covered by the digging machines 102, and an elevation or "lift height" of the work surface 110 of the worksite 112, among other machine telematic data to, for example, the system controller 122. Further, the machine data may include any data defining the operation of the machines 102, 104, 105, 106, 107. For example, the machine data may include data such as: distances traveled; area of the worksite covered or moved over; volume, mass or weight extracted, hauled and/or deposited; duration of operation of the machines; fuel utilized by the machines; sensory information obtained from sensors within the machines, unique identifiers for each of the machines, a type of each of the machines, and location related parameters such as, region, district, and area; among other machine data.

Similarly, the loading machines 104 load material such as the soil 118 into the hauling machines 106, and the amount of the material in area (e.g., cubic meters ($m^3$)) or mass (e.g., metric tons (t)), among other machine telematic data, may be reported to the system controller 122 as the respective sensors 130, controllers 136, and communication devices 126 associated with the machines 102, 104, 105, 106, 107 sense, measure, process, and transmit the machine telematic data. Further, the amount of the material in area (e.g., $m^3$) or mass (e.g., t) moved by the hauling machines 106 as well as distances traveled by the hauling machines 106 in transporting the material, among other machine telematic data may be sensed, measured, processed, and transmitted to the system controller 122 using the sensors 130, controllers 136, and communication devices 126 associated with the machines 102, 104, 105, 106, 107. As to the compacting machines 105, a portion in, for example, square meters ($m^2$) of the work surface 110 of the worksite 112 over which the compacting machines 105 move over, and lift height of the work surface 110 of the worksite 112, among other machine telematic data may be reported to the system controller 122 using the sensors 130, controllers 136, and communication devices 126 associated with the compacting machines 105. Further, an amount of material moved in area (e.g., $m^3$) or mass (e.g., t), and square meters ($m^2$) of the work surface 110 of the worksite 112 over which the grading machine 107 moves over, among other machine telematic data may be sensed, measured, processed, and transmitted by the sensors 130, controllers 136, and communication devices 126 associated with the grading machine 107 to the system controller 122.

Further, in an example, telematics data may include parameters related to operation of the associated machines 102, 104, 105, 106, 107 such as, for example, speed, heading direction, location of the machine 102, 104, 105, 106, 107, or any other telematic sensory information associated with the machine 102, 104, 105, 106, 107.

Thus, as described above, each of the machines 102, 104, 105, 106, 107 may telemetrically report production metrics of different types. Users may measure truck loads delivered by the machines 102, 104, 105, 106, 107 and/or a final grade (e.g., via grade control, manual survey, or drone flight) of the worksite 112 to measure progress of the entire worksite plan such as a mass excavation project that utilizes a plurality of different machines 102, 104, 105, 106, 107. These two data points (i.e., truck loads and final grade of the worksite 112) may not provide sufficient insight into the worksite plan such as a mass excavation to pinpoint the underperforming machines 102, 104, 105, 106, 107 within the worksite plan. Other progress measurements may be used for each individual task within the worksite plan, but they are difficult to correlate to the upstream or downstream tasks or steps within the worksite plan. The different production metrics for the different machines 102, 104, 105, 106, 107 described herein may make it difficult in reporting an overall completion level of the worksite plan in which the machines complete a plurality of different tasks. Further, because the different machines 102., 104, 105, 106, 107 report different production metrics, it may be difficult to obtain insight into which machines within the worksite are underperforming within the overall worksite plan as described above. This is because it may be difficult to practically compare differing production metrics since they are thought to be incomparable or incommensurable metrics. These production metrics may be presented on a user interface such as those provided by the display devices of the electronic devices 128 within the system 100. However, even with the display of these production metrics, a user, such as a supervisor, manager, crew member or other individual associated with the worksite plan, may find it difficult to understand each individual production metric as it relates to other production metrics of the machines or within the overall worksite plan.

In the examples described herein, the machines 102, 104, 105, 106, 107 may report a unifying production metric or machine data that is used to create the unifying production metric. The data transmitted from the machines 102, 104, 105, 106, 107 may be processed by, for example, the system controller 122 using on one or more data maps, look-up tables, neural networks, algorithms, machine learning algorithms, and/or other components to obtain the unifying production metric. The unifying production metric is directly comparable between machines 102, 104, 105, 106, 107 despite the differences in tasks that are performed by the individual machines and their respective, individual production metrics. This unifying production metric may be used to measure an overall progress of the worksite plan progress as well as the efficiency of the system 100 and the efficiency of individual machines 102, 104, 105, 106, 107 as they operate to complete tasks within the worksite plan.

Further, in one example, the system controller 122 of the system 100 may track progress using the unifying production metric without a knowledge of the overall worksite plan. In this example, an indication that 100,000 $yd^3$ may be reported to the system controller 122 from the machines 102, 104, 105, 106, 107 as having been loaded, hauled, spread, and compacted by the machines 102, 104, 105, 106, 107 at the worksite 112 without knowing a total goal of, for example, 300,000 $yd^3$. A representation of this tracked amount may be presented to a user on display devices of the electronic devices 128, for example. Further, the system controller 122 of the system 100 may report to a user a per task progress of the individual machines 102, 104, 105, 106, 107. For example, the system controller 122 may report that 120,000 $yd^3$ have been loaded by a loading machine 104, but that only 80,000 $yd^3$ have been compacted by a compacting machine 105. The presentation of per-machine production metrics to a user allows the user to understand how efficient each of the machines 102, 104, 105, 106, 107 are performing.

In one example, the unifying production metric may be calculated by the system controller 122 as machine data is received from the machines 102, 104, 105, 106, 107. The machine data may be requested by the system controller 122 or passively received by the system controller 122 as the machines 102, 104, 105, 106, 107 constantly or periodically transmit the machine data. In one example, the machines 102, 104, 105, 106, 107 transmit machine data via the respective communication devices 126 of the machines, through the central station 108 and the network 124 to the system controller 122.

In one example, the unifying production metric may be calculated based at least partially on data input by a user at an initial creation of the worksite plan, machine data as telemetrically received from the machines 102, 104, 105, 106, 107, dimensions of the machines, and combinations thereof. The data input by the user may include data associated with, for example, the material that is interacted with on the worksite 112 including, for example, the soil 118, characteristics or properties of the material, a lift height defined as a desired elevation of the work surface 110 of the worksite 112, a target or goal timeline to complete a number of tasks within the worksite plan and/or the overall worksite plan, a total area of the work surface 110 and/or the worksite 112, and a haul distance defined by the distance a hauling machine 106, for example, moves material to and/or from the worksite 112, among other user inputs.

The machine dimensions used in calculating the unifying production metric may include any dimension of the machines 102, 104, 105, 106, 107 such as, for example, a blade width of a loading machine 104 or a grading machine 107, a drum width of, for example, a compacting machine 105, a volume of a dump bed of, for example, a hauling machine 106, and a volume of a bucket of, for example, a digging machine 102, among other dimensions of the machines. Further, in one example, location data determined by the location sensor 130 for each machine 102, 104, 105, 106, 107 may be sent via the communication devices 126, the central station 108, and the network 124 to the system controller 122 in order to include this data as part of the machine dimensions. The machine dimensions may be used by the system controller 122 to create and estimate the unifying production metric.

The machine data may be telemetrically received from the machines 102, 104, 105, 106, 107 by the system controller 122. Specifically, the machines 102, 104, 105, 106, 107 may send the machine data to the system controller 122 via the communication devices 126, the central station 108, and the network 124.

The unifying production metric includes an estimate of "area at lift." In one example, the area at lift may be defined as a compacted volume of a material per hauling unit. In this example, the volume may be measured in cubic meters ($m^3$). The hauling machines 106 may be identified and used as the hauling units. In one example, volume may be determined based on shrink and swell properties of the material such as the soil 118 which may swell in the presence of fluids such as water and shrink or retract as the fluid leaves the soil 118. The shrink and swell properties of the material may vary throughout the tasks of the worksite plan in which different machines 102, 104, 105, 106, 107 interact with the material such as the soil 118. Because shrink and swell of the soil 118 may change at each instance of interaction between the machines 102, 104, 105, 106, 107 and the soil 118, estimating the intermediate volume of the soil 118 may prove difficult. Therefore, the present system 100 may measure compacted volumes where the volume of the soil 118 or other material is measured in place after it is compacted on the worksite 112. Thus, measurement of any intermediate, non-compacted, loose soil 118 may not be made in order to remove inaccurate measurements from the present systems and processes.

In another example, the area at lift may be defined as a lift height including a depth of the material such as the soil 118 as compacted along a surface of the worksite 112. In this example, the elevation of the work surface may be measured as the lift height and may be defined as a depth of material such as the soil 118 that has been spread and compacted to a desired level of compaction at the worksite 112. In one example, after compaction the lift height may be measured, and another amount of material forming a next layer on the work surface 110 of the worksite 112 may be added. Multiple lifts build to the final surface.

In yet another example, the area at lift may be a combination of the above two examples where the area at lift (defined as the compacted volume of the material per hauling unit) and the lift height are considered in calculating the area at lift as the unifying production metric. In this example, both the volume of the soil 118 as compacted at the work surface 110 of the worksite 112 and the elevation of the work surface 110 of the worksite 112 may be measured to obtain the unifying production metric. Thus, an estimate of how much compacted area at the specified lift being hauled per truck can be calculated by considering: lift height, truck size (or payload), and the material properties.

In practice, the area at lift may be realized as material is added to the work surface 110 of the worksite 112 by a combination of digging machines 102, loading machines 104, and hauling machines 106 move the material to the worksite. The hauling machines 106 and grading machines 107 may spread the material along the work surface 110 of the worksite 112. The compacting machines 105 may then compact the material to a desired density. This process of material delivery, spreading, and compaction may be equivalent to one "lift," and the unifying production metric may be measured after each lift. In another example, the system controller 122 may calculate and report a volume of material per each task. For example, it may be reported that 120,000 $yd^3$ of the material has been loaded and hauled to the worksite by the digging machines 102, loading machines 104, and hauling machines 106, and that 80,000$yd^3$ of the material has been compacted using the grading machines 107 and the compacting machines 105.

In one example, the estimate of the unifying production metric may also be determined by considering truck loads or payloads produced by the digging machines 102, loading machines 104, and hauling machines 106 as the metric applied to the work performed by the grading machines 107 and compacting machines 105. Thus, instead of basing the estimation of the completion of a number of tasks within the worksite plan or the worksite plan overall on the compacted volume of the material and the lift height, the unifying production metric may be determined based on the amount in, for example, volume, mass, or weight of the material dug, loaded and hauled by the digging machines 102, loading machines 104, and hauling machines 106. This amount of material hauled may be applied to the operation of the grading machines 107 and the compacting machines 105 such that a level of completion of a task within the worksite plan or a level of completion of the worksite plan as a whole by the grading machines 107 and the compacting machines 105 may be based on the amount of material hauled.

In the examples described herein, the unifying production metric or "area at lift" may be correlated to volumetric measures at each sub-process or task within the overall worksite plan. In this example, the production metrics may be aggregated at three separate levels including the individual machine level where each individual machine 102, 104, 105, 106, 107 aggregates its production metrics, at a sub-system level, and at a jobsite level where production metrics from all the machines 102, 104, 105, 106, 107, are aggregated. Here, the sub-system level may include any machine 102, 104, 105, 106, 107 or groups of machines within the system, and the jobsite level includes all machines 102, 104, 105, 106, 107 together. Aggregating production metrics together into a single data set may improve processing time and reduce an amount of data transmitted between the machines 102, 104, 105, 106, 107 and the system controller 122. Thus, aggregation of the production metrics results in a more effective and efficient use of computing resources within the overall system 100.

As to the sub-system level of production metric aggregation, in one example, like production metrics may be collected by the system controller 122 and/or reported by the machines 102, 104, 105, 106, 107 in the aggregate. In these examples, a plurality of the loading machines 104, for example, may all share a common task and/or operation, and the machine data reported by the loading machines 104 may be aggregated together as a single production metric. Further, machines 102, 104, 105, 106, 107 that perform the same task may also collectively report production metrics aggregated together as a single production metric.

Still further, machines 102, 104, 105, 106, 107 that may report identical production metrics may also collectively report production metrics aggregated together as a single production metric even in situations where the machines 102, 104, 105, 106, 107 may perform different tasks. In this example, production metrics for a digging machine 102 and a loading machine 104 may be aggregated together either before or after sending the telematics data to the system controller 122 since the production metric for the digging machine 102 and a loading machine 104 may be a measure of volume or mass of material moved by their respective work tools 140 (e.g., buckets) irrespective of the dimensions of the work tools 140.

In any of the examples described herein, the system controller 122 may be configured to generate a user interface (UI) (not shown) that includes, among other things, information indicative of the level or percentage of completion of tasks within the worksite plan and/or a level or percentage of completion of the worksite plan as a whole. Further, in one example, the UI may display the unifying production metric and/or other metrics in a graphical manner. The UI may depict the production metrics in the form of a red. yellow. and green chart where red hues indicate a relatively lower percentage of completion of the tasks and/or the overall worksite plan relative to yellow hues, and yellow hues indicate a relatively lower percentage of completion of the tasks and/or the overall worksite plan relative to green hues. Other forms and methods of graphically depicting a level of completion of the tasks and/or the overall worksite plan are contemplated herein. Overall, the UI allows a user to easily understand the how the tasks and/or the overall worksite plan is moving along. In one example, the UI may be presented to a user and rendered interactive such that the user may select portions within the UI to drill down to levels within the worksite plan to determine efficiency within tasks and identify specific groups of machines 102, 104, 105, 106, 107 or individual machines that are or are not working as efficiently as expected or intended.

In any of the examples described herein, such UIs may be generated and provided by the controller 136 within the machines 102, 104, 105, 106, 107 to, for example, the electronic device 128 (e.g., via the network 124), a display of the machines 102, 104, 105, 106, 107, the system controller 122 (e.g., via the network 124), and/or to one or more components of the system 100 for display. Additionally or alternatively, such user interfaces may be generated and provided by the system controller 122 to, for example, the electronic device 128 (e.g., via the network 124), a display of the machines 102, 104, 105, 106, 107, and/or to one or more components of the system 100 for display.

In any of the examples described herein, one or more of the digging machines 102, loading machines 104, hauling machines 106, compacting machines 105, grading machine 107, and/or other machines of the system 100 may be manually controlled, semi-autonomously controlled, and/or fully-autonomously controlled. In examples in which the digging machines 102, loading machines 104, hauling machines 106, compacting machines 105, grading machine 107, and/or other machines of the system 100 are operating under autonomous or semi-autonomous control, the speed, steering, work tool positioning/movement, and/or other functions of such machines may be controlled automatically or semi-automatically based at least in part on the determined travel parameters and/or work tool positions described herein.

With continued reference to FIG. 1, and as noted above, each of the digging machines 102, loading machines 104, hauling machines 106, compacting machines 105, grading machine 107, and/or other machines of the system 100 may include a controller 136 as described herein. The controller 136 may comprise a component of a local control system on-board and/or otherwise carried by the respective machine 102, 104, 105, 106, 107. The controllers 136 may be any embedded system within the machines 102, 104, 105, 106, 107 that controls at least one of the electrical systems or subsystems in the machines 102, 104, 105, 106, 107, and thus at least one function of the machines 102, 104, 105, 106, 107. Such controllers 136 may be generally similar or identical to the system controller 122 of the control system 120. For example, each such controller 136 may comprise one or more processors, a memory, and/or other components described herein with respect to the system controller 122. The controllers 136 may include an electronic control unit (ECU) such as, for example, an electronic control module (ECM), a powertrain control module (PCM), a transmission control module (TCM), a brake control module (EBCM), a central control module (CCM), a central timing module (CTM), a general electronic module (GEM), a body control module (BCM), a suspension control module (SCM), and a control unit, among other types of ECUs. The ECUs may include hardware and embedded software that assist in the operation of the machines 102, 104, 105, 106, 107.

In some examples, a controller 136 may be located on a respective one of the machines 102, 104, 105, 106, 107, and may also include components located remotely from the respective one of the machines 102, 104, 105, 106, 107, such as on any of the other machines of the system 100 or at the command center described herein (not shown). Thus, in some examples the functionality of the controller 136 may be distributed so that certain functions are performed on the respective one of the machines 102, 104, 105, 106, 107 and other functions are performed remotely. In some examples, controller 136 of the local control system carried by a respective machine 102, 104, 105, 106, 107 may enable autonomous and/or semi-autonomous control of the respective machine either alone or in combination with the control system 120. Further, the controller 136 carried by a respective machine 102, 104, 105, 106, 107 may instruct the respective communication devices 126 and location sensors 130 to function as described herein and as directed by, for example, the system controller 122.

With continued reference to FIG. 1, in some examples one or more machines 102, 104, 105, 106, 107 of the system 100 may include an implement or other work tool 140 that is coupled to a frame of the machine. For example, in the case of a loading machine 104, the work tool may comprise a bucket configured to carry material within an open volume or other substantially open space thereof. The loading machine 104 may be configured to, for example, scoop, lift, and/or otherwise load material (e.g., material removed by the digging machines 102) into the work tool 140 by lowering the work tool 140 to a loading position. For example, the loading machine 104 may include one or more linkages 142 movably connected to a frame of the loading machine. The work tool 140 may be connected to such linkages 142, and the linkages 142 may be used to lower the work tool 140 (e.g., via one or more hydraulic cylinders, electronic motors, or other devices connected thereto) to a loading position in which a leading edge 144 of the work tool 140 is disposed proximate, adjacent, and/or at the work surface 110, and a base of the work tool 140 is disposed substantially parallel to the work surface 110. The loading machine 104 may then be controlled to advance along the surface of the work surface 110 of the worksite 112 such that the work tool 140 may impact the material, a positive-volume soil 118, and/or other object disposed on the work surface 110 so as to transfer the material at least partially into the open space of the work tool 140. The linkages 142 may then be controlled to raise, pivot, and/or tilt the work tool 140 to a carrying position above the work surface 110. The loading machine 104 may then be controlled to traverse the worksite 112 until the loading machine 104 reaches a dump zone, the hauling machine 106, and/or another location at the worksite 112 designated for receiving the removed material being carried by the work tool 140. The linkages 142 may then be controlled to lower, pivot, and/or tilt the work tool 140 to an unloading position in which the material carried within the open space of the work tool 140 may be deposited (e.g., due to the force of gravity acting on the material carried by the work tool 140) at the dump zone, within a bed of the hauling machine 106, and/or as otherwise desired. Like the loading machines 104, the digging machines 102, hauling machines 106, compacting machines 105, grading machine 107, may also include work tools 140 and/or linkages 142 that allow the machines to perform their respective operations as described herein.

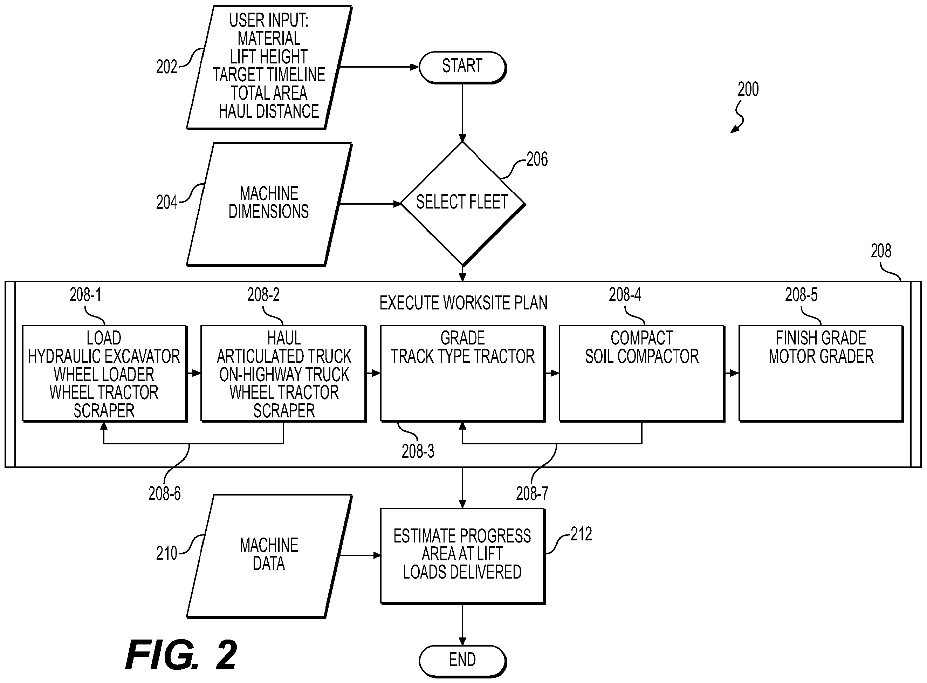

FIG. 2 is a flow chart depicting an example method 200 associated with the system 100 shown in FIG. 1. The example method 200 is illustrated as a collection of steps in a logical flow diagram, which represents operations that can be implemented in hardware, software, or a combination thereof. In the context of software, the steps represent computer-executable instructions stored in memory. When such instructions are executed by, for example, the system controller 122 of the control system 120, such instructions may cause the machines 102, 104, 105, 106, 107, various components of the control system 120 (e.g., the electronic devices 128), a controller of a digging machine 102, a controller of a loading machine 104, a controller of a hauling machine 106, a controller of a compacting machine 105, a controller of a grading machine 107, and/or other components of the system 100 to perform the recited operations. Such computer-executable instructions may include routines, programs, objects, components, data structures, and the like that perform particular functions or implement particular abstract data types. The order in which the operations are described is not intended to be construed as a limitation, and any number of the described steps can be combined in any order and/or in parallel to implement the process. For discussion purposes, and unless otherwise specified, the method 200 and other methods described herein is described with reference to the system 100, the control system 120, the controllers 136 of the machines 102, 104, 105, 106, 107, the worksite 112, and/or other items shown in FIG. 1. In particular, although any part of and/or the entire method 200 may be performed by the system controller 122, the electronic devices 128, a controller 136 of the machines 102, 104, 105, 106, 107, and/or other components of the system 100, either alone or in combination, unless otherwise specified, the method 200 will be described below with respect to the system controller 122 for ease of description.

With reference to FIG. 2, at 202 the system controller 122 may receive information associated with one or more tasks, jobs, or other operations to be performed by the system 100 at the worksite 112. The information received at 202 may include, for example, among other things, user inputs 202 that define a worksite plan that is to be executed by one or more of the machines 102, 104, 105, 106, 107 of the system 100 at the worksite 112. A worksite plan may include, for example, instructions, locations (e.g., GPS coordinates, UTS coordinates, etc.), and/or other information identifying a perimeter and/or boundary of at least a portion of the work surface 110 within which such operations are to be performed.

The user inputs 202 may also include characteristics of materials within the worksite 112. For example, the materials may include the soil 118, sand, minerals, gravel, stones, rocks, boulders, concrete, asphalt, and overburden, among other materials.

Further, the user inputs 202 may include a target timeline, deadline or goal. In one example, the target timeline, deadline or goal may be associated with a number of individual tasks within the worksite plan. In one example, the target timeline, deadline or goal may be associated with the worksite plan overall that defines a completion of the entire worksite plan and the number of tasks within the worksite plan.

The user inputs 202 may also include haul distances within the worksite and between off-site locations and the worksite 112. The user input may further include details regarding the worksite plan such as, for example, GPS coordinates identifying a boundary and/or other area of the work surface 110, an intended lift height, elevation grade and other characteristics of the work surface 110 of the worksite 112 to be achieved by the worksite plan, and current elevations along the work surface 110 of the worksite 112, among other data relating to the worksite 112. In some examples, the worksite plan may include a first set of GPS coordinates, and/or other information identifying locations of the material, and a second set of GPS coordinates identifying a dump zone, a working zone where one or more of the machines 102, 104, 105, 106, 107 are assigned to or are currently working, and/or other areas within the worksite 112 where work may be performed.

In some examples, the user input including the worksite plan received at 202 may also include information indicative of the type of material to be moved (e.g., soil, sand, minerals, gravel, concrete, asphalt, overburden, etc.), information uniquely identifying the machines 102, 104, 105, 106, 107 present at the worksite 112 (e.g., one or more license plate numbers, model numbers, machine types, and/or other unique identifiers associated with the respective machines of the system 100 present at the worksite 112), information uniquely identifying the operators of the respective machines (e.g., names, employers, employee identification numbers, experience levels, and/or other information), a two-dimensional and/or three-dimensional map of the worksite 112, GPS coordinates of any known imperfections or other obstacles at the worksite 112 (e.g., GPS coordinates identifying the location, boundary, and/or extent of one or more trees, bodies of water, man-made obstruction, power lines, utility lines, drainage lines, roads, sidewalks, parking lots, etc.), and/or other information associated with the system 100 and/or the worksite 112.

At 204, the system controller 122 may receive machine dimensions from the machines 102, 104, 105, 106, 107 present at the worksite 112. As described herein, the machine dimensions may include any dimension of the machines 102, 104, 105, 106, 107 such as, for example, a blade width of a loading machine 104 or a grading machine 107, a drum width of, for example, a compacting machine 105, a volume of a dump bed of, for example, a hauling machine 106, and a volume of a bucket of, for example, a digging machine 102 or a loading machine 104, among other dimensions of the machines. In one example, the machine dimensions received at 204 may be received by the system controller 122 through user input to, for example, the system controller 122 itself or an electronic device 128. In another example, the machine dimensions may be obtained by the system controller from a database within the system controller 122 or any of the electronic devices 128. In this example, the database of the system controller 122 or the electronic device 128 may be accessed as the fleet of machines 102, 104, 105, 106, 107 is selected at 206 such that the dimensions of those machines 102, 104, 105, 106, 107 selected may be obtained from the database. Further, in one example, at 204 location data determined by the location sensor 130 for each machine 102, 104, 105, 106, 107 may be sent via the communication devices 126, the central station 108, and the network 124 to the system controller 122 in order to include this data as part of the machine dimensions. The machine dimensions may be used by the system controller 122 to create and estimate the unifying production metric. The unifying production metric may be used as data to support a depiction of a level of completion of tasks within a worksite plan or the worksite plan overall in a UI as described herein.

At 206, a fleet of machines is selected. In one example, the fleet is selected from the types of machines 102, 104, 105, 106, 107 described herein. The fleet may be autonomously selected by the system controller 122 based on the user inputs and worksite plan obtained at 202 and/or 204. In this example, the types of work performed as defined within the worksite plan and the tasks defined in the worksite plan may be used to select which of the machines 102, 104, 105, 106, 107 will participate in performing the tasks within the worksite plan. In another example, the fleet may be selected by a number of users such as a supervisor, manager, crew member or other individual associated with the worksite plan. In this example, the system controller 122 may prompt one or more of these individuals to provide such input to the system controller 122.

Once the fleet of machines 102, 104, 105, 106, 107 has been selected, the worksite plan may be executed at 208. The execution of the worksite plan may include loading 208-1, hauling 208-2, grading 208-3, compacting 208-4, and finish grading 208-5 the material such as the soil 118 at the worksite 112. Loading 208-1 the material may include using an excavator, backhoe, dozer, drilling machine, trencher, drag line, a wheel loader, a wheel tractor, a tracked loader, a front shovel, a cable shovel, a stack reclaimer, a scraper, and/or other digging machines 102 and loading machines 104 to excavate and load material such as the soil 118 into a hauling machine 106. Hauling 208-2 the material may include using an articulated truck, an off-highway truck, an on-highway dump truck, and a wheel tractor scraper, among other types of hauling machines 106 to move the material to and from the worksite 112 or between separate locations within the worksite 112. As designated by arrow 208-6, the hauling machines 106 may return any number of times to the location of the loading machines 104 to load 208-1 and haul 208-2 more material.

The execution of the worksite plan may also include grading 208-3 the work surface 110 of the worksite 112. Grading 208-3 the work surface 110 may be performed using track-type tractors, scrapers, bulldozers, motor graders, and other grading machines. Further, the execution of the worksite plan may include compacting 208-4 the material such as the soil 118 using a double drum compacting machine, a wheeled or tracked soil compactor, a vibratory soil compactor, and a tandem vibratory compactor among other types of compacting machines 105. The grading 208-3 and compaction 208-4 may be performed in series a number of times as indicated by arrow 208-7 in order to maintain a graded surface as compaction 208-4 is performed.

At 208-5, a finish grade may be obtained at the work surface 110 through the use of a scraper, bulldozer, motor grader, or other machine. The finish grade is performed to create a flat surface by grading material such as soil at the worksite 112 for subsequent operations such as, for example, additional compacting operations 208-4, or placement of paved surfaces or structures on the finished grade.

In one example, the individual machines 102, 104, 105, 106, 107 may execute their respective tasks within the worksite plan independently. In this example, the machines 102, 104, 105, 106, 107 may continually or periodically send machine data representing production metrics, and the system controller 122 of the system 100 may passively receive the production metrics from the machines to estimate the progress of the individual tasks and/or the overall worksite plan.

In one example, the processes performed by the machines 102, 104, 105, 106, 107 at 208 may be performed autonomously and/or semi-autonomously. In these autonomous and/or semi-autonomous scenarios, the system controller 122 may cause the machines 102, 104, 105, 106, 107 to perform their respective tasks as described herein by sending instructions to the respective controllers 136 of the machines 102, 104, 105, 106, 107 via the network 124, the satellite 132 and/or the central stations 108, and communication devices 126 of the respective machines 102, 104, 105, 106, 107. The controllers 136 of the machines 102, 104, 105, 106, 107 may execute the instructions as received from the system controller 122 to cause the machines 102, 104, 105, 106, 107 to perform the tasks as defined by the instructions.

At 210, a component of the system 100 may provide machine data to the system controller 122. At 212, the system controller 122 may estimate 212 progress with respect to the tasks defined by the worksite plan and/or the worksite plan overall. As described herein, the system controller 122 uses a unifying production metric to determine the level or percentage of completion of the tasks defined by the worksite plan and/or the worksite plan overall. The unifying production metric may be obtained from the machines 102, 104, 105, 106, 107 as the machine data 210 or may be calculated or derived by the system controller 122 from the machine data 210. Also, as described herein, the unifying production metric may be based on area at lift and number of loads delivered. In one example, the unifying production metric may be calculated or derived based on the following:

$$ Lift = Mat_{Del} + Mat_{Sp} + Mat_{Com} \qquad \text{Eq. 1} $$

where: $Mat_{Del}$ is the material delivered to the worksite 112; $Mat_{Sp}$ is the material spread along the work surface 110 of the worksite; and $Mat_{Com}$ is the material compacted along the work surface 110 of the worksite.

In Eq. 1, the lift may be determined irrespective of mass or volume of the material delivered, spread, and compacted since the masses and volumes may be inconsistently measured by, for example, the digging machines 102, loading machines 104, and hauling machines 106 (i.e., as delivery machines), grading machines 107 (i.e., as spreading machines), and compacting machines 105 (i.e., as compacting machines). Thus, once all three types of machines 102, 104, 105, 106, 107 have worked a given area, one lift is considered complete. The unifying production metric may be described as area at lift and may be calculated or derived as follows:

$$ Unifying\ Production\ Metric = \frac{Lift}{Area} \qquad \text{Eq. 2} $$

where the Area is the square meter ($m^2$) value at which the lift was completed. In one example where the production metric being unified, the system controller 122 will estimate how much compacted area each delivery machine (i.e., the digging machines 102, loading machines 104, and/or hauling machines 106) contains. If, however, the production metric of interest is loads of material 118 (i.e., truck loads or payloads), in another example, the system controller 122 may estimate how many loads of material 118 the grading machines 107 (i.e., as spreading machines), and compacting machines 105 (i.e., as compacting machines) have completed. Thus, in the examples described herein, one type of metric may be assumed to have been completed based on the lift defined in Eq. 1, and the unifying production metric may be calculated based on one type of metric.

To provide context for the above, in one example, data from multiple machines 102, 104, 105, 106, 107 may be combined to determine the number of lifts completed. For a lift to be considered complete, three tasks must take place. First, material is delivered to the worksite 112. This may be accomplished via the digging machines 102, the loading machines 104, and the hauling machines 106. The dump locations may be close to where the material will be spread. Second, a grading machine 107 may spread the material out at a depth specified by the worksite plan. Third, a compacting machine 105 may compact the recently spread material 118 to bring that material 118 to the compaction level specified in the worksite plan. Compaction of the material may take a plurality of passes by the compacting machine 105. Thus, a "lift" may be defined as material delivery, spread, and compaction. The unifying production metric that provides for a common production metric between the machines 102, 104, 105, 106, 107 of different types and different individual production metrics may be defined based on the number of lifts performed within the specified area of the worksite 112. In this manner, a user may be able to more readily understand how differing production metrics from different machines 102, 104, 105, 106, 107 that otherwise may not be practically compared due to their incomparable or incommensurable metrics, may be understood using the unifying production metric described herein.

In one example, the system controller 122 may separately calculate the unifying production metric using both metrics of interest (i.e., area and loads) as described in the two examples above and obtain two separate values of the unifying production metric. The system controller 122 may then take an average, a mean, a mode, a weighted average or another measure of central tendency of the two separate calculations to obtain a single unifying production metric. In its calculations, the system controller 122 may rely on one or more data maps, look-up tables, neural networks, algorithms, machine learning algorithms, and/or other components relating to the operating conditions and the operating environment of the system 100 that may be stored in the memory of the system controller 122.

In one example, the unifying production metric may include a measure of an area within the segmented portion of the worksite 112 such as the work surface 110 of the worksite 112 at a particular lift height. The lift height may be defined by a depth of a material deposited and compacted within the segmented portion of the worksite 112. In one example, bulk earthmoving may include material placement in "lifts" as described above. A lift may be defined as a specified vertical distance to be placed and compacted before additional material (i.e., additional lifts) may be placed on top. To measure machine production, it may be helpful to determine how many lifts have been completed or which lift the machine 102, 104, 105, 106, 107 is currently performing the work. In this example, this process may apply to grading machines 107 and compacting machines 105 because these machines may be working in the same small geographical area within the worksite 112 but have completed multiple lifts.

The unifying production metric may alleviate any difficulties as to how to gauge how many lifts have been completed using traditional machine data. High precision GPS data obtained from the location sensors 130 may be utilized for accurate elevation data. However, even with the use of GPS data from the location sensors 130, lift height may be within a margin of error. The unifying production metric as derived and calculated by the system controller 122 provides a means for the progress of all equipment working in a given area and the worksite plan to be determined, and not just for those machines equipped with high precision GPS with grade control systems.

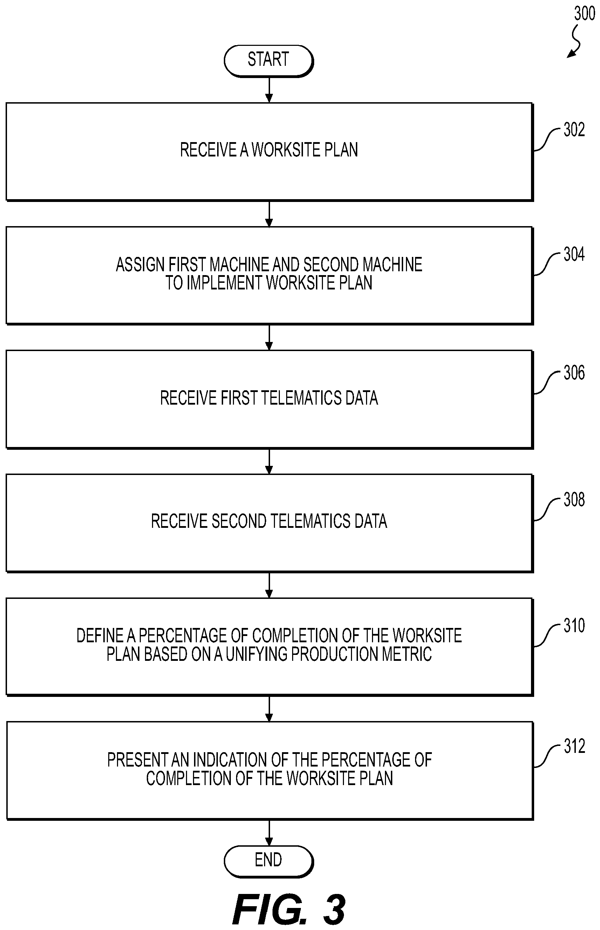

FIG. 3 is a flow chart depicting an example method 300 associated with the systems and methods shown in FIGS. 1 and 2. At 302, a controller, such as the processing and memory architecture of the system controller 122 of the control system 120, may receive a worksite plan to be executed by at least a first machine 102, 104, 105, 106, 107 and a second machine 102, 104, 105, 106, 107 at a worksite. The worksite plan includes any number of tasks to be performed by the machines 102, 104, 105, 106, 107 that brings about an intended change in a work surface 110 of the worksite 112. As described herein, the worksite plan may include a mass excavation project that utilizes a plurality of different machines 102, 104, 105, 106, 107. The worksite plan may include, for example, instructions, locations (e.g., GPS coordinates, UTS coordinates, etc.), and/or other information identifying a perimeter and/or boundary of at least a portion of the work surface 110 within which such operations or tasks are to be performed.

In one example, the worksite plan may be included as user input (FIG. 2, 202) and may be input to the electronic devices 128 located at the worksite 112 and/or remote from the worksite 112 or to the system controller 122 directly. In another example, the worksite plan may be generated by the system controller 122 or other processing device based on the user input (FIG. 2, 202).

At 304, the system controller 122 may assign the first machine 102, 104, 105, 106, 107 and the second machine 102, 104, 105, 106, 107 to implement the worksite plan based on first capabilities of the first machine and second capabilities of the second machine. The capabilities of the machines 102, 104, 105, 106, 107 are defined by what type of machines they are (e.g., digging machines 102, loading machines 104, hauling machines 106, compacting machines 105, grading machines 107, and/or other types of machines) and their associated functions. The machines selected (FIG. 2, 206) may be based at least partially on the tasks defined within the worksite plan.

A first sensor of the first machine may determine parameters indicative of a first production metric during execution of a first task, and a second sensor of the second machine may determine parameters indicative of a second production metric different from the first production metric during execution of a second task different from the first task. The first and second sensors may be any sensors associated with the machines 102, 104, 105, 106, 107 that may detect a production metric of the machines directly or indirectly. For example, the sensors may include the location sensors 130 that detect the location of the machines. Being able to detect the location of the machines allows for a production metric associated with distances traveled and area covered by the machines 102, 104, 105, 106, 107 to be obtained. For example, a compacting machine 105 and/or a grading machine 107 may be used to cover the work surface 110 of the worksite 112 in a sequential manner moving back and forth across what may be an entirety of the work surface 110 in order to uniformly grade and compact the entirety of the work surface 110. Thus, data obtained from the location sensor 130 of the compacting machine 105 may define the production metric of the compacting machine 105.

As another example, the sensors may include a weight sensor that may be included within, for example, a digging machine 102, a loading machine 104, and/or a hauling machine 106. The weight sensor may determine a weight of the material such as the soil 118 that is lifted and carried by the digging machine 102, the loading machine 104, and/or the hauling machine 106. In the above examples of sensor-bound machines 102, 104, 105, 106, 107, although two sensors are described, any number of sensors may be used within each individual machine, and any number of machines may include sensors to detect parameters of those machines indicative of their respective production metrics.

At 306, the system controller 122 may receive first machine telematics data from the first machine 102, 104, 105, 106, 107 corresponding to the first task and associate the first telematics data with the first production metric from the first machine 102, 104, 105, 106, 107 within a segmented portion of the worksite 112. The telematics data may be measured by the sensors, transmitted by the controllers 136 within the machines 102, 104, 105, 106, 10, and received by, for example, the system controller 122. Thus, the data received by the system controller 122 defines the sensed data and is transmitted at a distance, by electrical translating means such as a wired or wireless communication network including the network 124. The association of the first telematics data with the first production metric may be performed using, for example, data maps, look-up tables, neural networks, algorithms, machine learning algorithms, and/or other components.

Similarly, at 308 the system controller 122 may receive second machine telematics data corresponding to the second task and associating the second telematics data with the second production metric from the second machine 102, 104, 105, 106, 107 within the segmented portion of the worksite 112. Again, the second production metric is different from the first production metric and the second task is different from the first task. Because differing production metrics cannot be practically compared since they are thought to be incomparable or incommensurable metrics, a unifying production metric may be determined by the system controller 122 using the methods and algorithms described herein including, for example, Eq. 1 and Eq. 2 described herein. Thus, at 310 the system controller 122 may determine a percentage of completion of the worksite plan based on the unifying production metric. The unifying production metric may be determined based on at least the first production metric and the second production metric as inputs. Further, data input by a user at an initial creation of the worksite plan (FIG. 2, 202), and machine dimensions (FIG. 2, block 204), along with the first production metric and the second production metric as inputs may be used to determine the unifying production metric as described herein.

At 312, the system controller 122 may generate a user interface (UI) that includes an indication of the percentage of completion of the worksite plan based on the unifying production metric. The UI may be presented on any output device including a display device, a printing device, or other output device. For example, the UI may be presented on the electronic devices 128 located at the worksite 112 and/or remote from the worksite 112 and/or a UI of the system controller 122. The UI may include a graphical and/or alphanumeric indication of a level or percentage of completion of the worksite plan and/or a number of tasks included within the worksite plan. The worksite plan may be a mass excavation plan having a plurality of steps including, for example, with an excavation unit such as the digging machines 102, excavating material within the worksite 112, and with a loading unit such as the loading machine 104, loading a material into a hauling unit such as the hauling machine 106. The worksite plan may also include, with the hauling unit such as the hauling machine 106, depositing the material to the worksite 112 defined by the worksite plan. Further, the worksite plan may include, with a material spreading unit such as the grading machine 107, spreading the material along a surface of the worksite 112, and with a compacting unit such as the compacting machine 105, compacting the material along the surface of the worksite 112. Still further, the worksite plan may include, with a grading unit such as the grading machine 107, grading a slope of the material along the surface of the worksite 112.

In one example, the first production metric of the first machine 102, 104, 105, 106, 107 and the second production metric of the second machine 102, 104, 105, 106, 107 may include at least one of a mass of material loaded into a hauling unit, a mass of the material moved to the worksite, a mass of the material spread across the worksite, and a grade of the material along within the worksite. In this example, these production metrics may be used to determine contributions of individual machines 102, 104, 105, 106, 107 in producing a lift as described herein.

In some examples, the first machine 102, 104, 105, 106, 107 and the second machine 102, 104, 105, 106, 107 may be of a same type of machine. In this example, the first machine 102, 104, 105, 106, 107 and the second machine 102, 104, 105, 106, 107 may be characterized by a same production metric relating to an implementation of the worksite plan. Thus, in this example, the method 300 of FIG. 3 may further include calculating the same production metric of the same type of machine 102, 104, 105, 106, 107 together as a whole. This may make computations and determinations as to the production metrics within a lift faster and less burdensome on computing resources of, for example, the system controller 122.

In some examples, the first production metric may include at least one of a first dimension of a first material-moving element of the first machine 102, 104, 105, 106, 107 and first location data obtained from the first machine 102, 104, 105, 106, 107. Further, the second production metric may include at least one of a second dimension of a second material-moving element of the second machine 102, 104, 105, 106, 107 and second location data obtained from the second machine 102, 104, 105, 106, 107. In this example, the dimensions of the first and second material-moving elements assist in understanding that 102, 104, 105, 106, 107 roles of the machines in contributing to the lifts used to determine the unifying production metric.

The method 300 of FIG. 3 may also include receiving, with the system controller 122, a user input indicating at least one of a compacted volume of a material per hauling unit, a lift height including a depth of the material as compacted along a surface of the worksite, and the compacted volume of the material per hauling unit and the lift height. These machine dimensions 204 may be used by the system controller 122 in determining the unifying production metric in examples where the production metric of interest is loads of material 118 (i.e., truck loads or payloads). In this example, the system controller 122 may estimate how many loads of material 118 the grading machines 107 (i.e., as spreading machines), and compacting machines 105 (i.e., as compacting machines) have completed. Thus, the unifying production metric may be determined based at least in part on machine dimensions 204 of the the digging machines 102, loading machines 104, and/or hauling machines 106 that may be obtained as user inputs or stored as data within a data storage device. Further, the unifying production metric may be determined based at least in part on the compacted volume of the material at the worksite 112. In this example, the production metric of interest is loads of material 118 (i.e., truck loads or payloads) where the system controller 122 may estimate how many loads of material 118 the grading machines 107 (i.e., as spreading machines), and compacting machines 105 (i.e., as compacting machines) have completed.

Industrial Applicability

The present disclosure describes systems and methods for obtaining a unifying production metric across a number of machines 102, 104, 105, 106, 107 that perform different tasks within a worksite plan and that report production metrics that are incomparable or incommensurable. Such systems and methods may be used to more efficiently present to a user a level or percentage of completion of the worksite plan and a plurality of tasks such that the user may fully understand how efficiently the worksite plan is being performed. The systems and methods coordinate activities of one or more digging machines 102, loading machines 104, compacting machines 105, hauling machines 106, grading machines 107 and/or other components of the system 100 during execution of the worksite plan and/or other operations at the worksite 112. For example, such systems and methods may enable a system controller 122 to obtain telemetrically delivered machine data and use the machine data to calculate the unifying production metric. The system controller 122 may also present a representation of the unifying production metric to a number of users via at least one user interface. Thus, users may be able to be notified of and readily understand a level or percentage of completion of the worksite plan and the tasks included in the worksite plan.

As a result, the systems and methods of the present disclosure may assist in reducing the time and resources required to perform various tasks at the worksite 112 and within the worksite plan by assisting users with a more effective understanding of the progress of the various machines utilized within the worksite plan. The systems and methods of the present disclosure may also assist a user in determining what machines or groups of machines may be functioning less efficiently. As a result, the systems and methods of the present disclosure may allow a user to correct any inefficiencies and reduce the time in may take to complete the worksite plan and allow for the meeting of expected deadlines or timelines. Thus, a unifying production metric may assist a user in understanding a complete level or percentage of a worksite plan. With this understanding, the user may be able to execute the worksite plan in an efficient manner. The disclosed systems and methods may facilitate the determination and presentation of a unifying production metric.

While aspects of the present disclosure have been particularly shown and described with reference to the embodiments above, it will be understood by those skilled in the art that various additional embodiments may be contemplated by the modification of the disclosed machines, systems and methods. Such embodiments should be understood to fall within the scope of the present disclosure as determined based upon the following claims.

**Claims**

**1.** A method (300), comprising:

receiving (302), with a controller, a worksite plan to be executed by at least a first machine (102, 104, 105, 106, 107) and a second machine (102, 104, 105, 106, 107) at a worksite (112);
assigning (304), with the controller (122), the first machine (102, 104, 105, 106, 107) and the second machine (102, 104, 105, 106, 107) to implement the worksite plan based on capabilities of the first machine (102, 104, 105, 106, 107) and the second machine (102, 104, 105, 106, 107), wherein:

the first machine (102, 104, 105, 106, 107) collects a first production metric during execution of a first task, and the second machine (102, 104, 105, 106, 107) collects a second production metric different from the first production metric during execution of a second task different from the first task;
receiving (306, 308), with the controller (122), machine telematics data defining the first production metric from the first machine (102, 104, 105, 106, 107) and the second production metric from the second machine

(102, 104, 105, 106, 107) within a segmented portion of the worksite (112);

defining (310), with the controller (122), the first production metric and the second production metric within the segmented portion of the worksite (112) using a unifying production metric defining a percentage of completion of the worksite plan; and

presenting (312), with the controller (122) and on a user interface, an indication of a level of completion of the worksite plan based on the unifying production metric.

**2.** The method (300) of claim 1, wherein:

the unifying production metric includes a measure of an area within the segmented portion of the worksite (112) at a lift height of the segmented portion, and

the lift height is defined by a depth of a material (118) deposited and compacted within the segmented portion of the worksite (112).

**3.** The method (300) of claim 1, wherein the worksite plan is a mass excavation plan including:

a loading unit (104) loading a material (112) into a hauling unit (106);

wherein the hauling unit (106) depositing the material (118) to the worksite (112) defined by the worksite plan;

a material spreading unit (107) spreading the material (118) along a surface of the worksite (112);

a compacting unit (105) compacting the material (118) along the surface of the worksite (112); and

a grading unit (107) grading a slope of the material (118) along the surface of the worksite (112).

**4.** The method (300) of claim 1, wherein the first production metric and the second production metric include at least one of a mass of material (118) loaded into a hauling unit (106), a mass of the material (118) moved to the worksite (112), a mass of the material (118) spread across the worksite (112), and a grade of the material (118) along the worksite (112).

**5.** The method (300) of claim 1, wherein:

the first machine (1 02, 104, 105, 106, 107) and the second machine (102, 104, 105, 106, 107) are a same type of machine and utilize a same production metric relating to an implementation of the worksite plan; and

the method further includes calculating the same production metrics of the same type of machine (102, 104, 105, 106, 107) together as a whole.

**6.** The method (300) of claim 1, wherein the first production metric and the second production metric include at least one of a dimension of a material-moving element of the first machine (102, 104, 105, 106, 107) and the second machine (102, 104, 105, 106, 107), and location data obtained from the first machine (102, 104, 105, 106, 107) and the second machine (102, 104, 105, 106, 107).

**7.** The method (300) of claim 1, further comprising receiving, with the controller (122), user inputs including a material to apply to the worksite (112118) to be placed at the worksite (112), a target timeline for completion of the worksite plan and the first task and the second task, a total area of the worksite (112), and a distance of hauling the material (118) to the worksite (112).

**8.** The method (300) of claim 7, wherein the unifying production metric is determined based at least in part on the user inputs.

**9.** The method (300) of claim 7, wherein the unifying production metric is determined based at least in part on a compacted volume of the material (118) at the worksite (112).

**10.** A system (100) comprising:

a controller (122);

a first machine (102, 104, 105, 106, 107) operable at a worksite (112);

a second machine (102, 104, 105, 106, 107) operable at the worksite (112);

a communication network (124) configured to transmit signals between the controller (112) and the first machine (102, 104, 105, 106, 107) and the second machine (102, 104, 105, 106, 107);

the controller (122) being configured to:

receive a worksite plan to be executed by the first machine (102, 104, 105, 106, 107) and the second machine (102, 104, 105, 106, 107) at the worksite (112);

transmit instructions to the first machine (102, 104, 105, 106, 107) to perform a first task defined by the worksite plan;

transmit instructions to the second machine (102, 104, 105, 106, 107) to perform a second task defined by the worksite plan, the second task being different from the first task;

receive, from the first machine (102, 104, 105, 106, 107), a first production metric during execution of the first task;

receive, from the second machine (102, 104, 105, 106, 107), a second production metric during execution of the second task, the second production metric being different from the first production metric;

present, on a user interface, an indication of a level of completion of the worksite plan based on a unifying production metric, the unifying production metric being defined by user input used to create the worksite plan, at least one dimension of material-moving devices of the first machine (102, 104, 105, 106, 107) and the second machine (102, 104, 105, 106, 107), location data obtained from the first machine (102, 104, 105, 106, 107) during execution of the first task, and location data obtained from the second machine (102, 104, 105, 106, 107) during execution of the second task.

11. The system (100) of claim 10, wherein the controller (122) is further configured to, if the first machine (102, 104, 105, 106, 107) and the second machine (102, 104, 105, 106, 107) measure a same production metric, aggregate the same production metric as received from the first machine (102, 104, 105, 106, 107) and the second machine (102, 104, 105, 106, 107) relating to an implementation of the worksite plan together as a whole.

12. The system (100) of claim 10, wherein the first machine (102, 104, 105, 106, 107) and the second machine (102, 104, 105, 106, 107) include a loading unit (104) to load a material (118) into a hauling unit (106), the hauling unit (106) configured to deposit the material (118) to the worksite (112), a material spreading unit (107) to spread the material (118) along a surface of the worksite (112), a compacting unit (105) to compact the material (118) along the surface of the worksite (112), or a grading unit (107) to grade a slope of the material (118) along the surface of the worksite (112).

13. The system (100) of claim 10, wherein:

the unifying production metric includes a measure of an area within a segmented portion of the worksite (112) at a lift height of the segmented portion, and

the lift height is defined by a depth of material (118) deposited and compacted within the segmented portion of the worksite (112).

14. The system (100) of claim 10, wherein the controller (122) is further configured to define the unifying production metric based on:

the user input including a material (118) to apply to the worksite (112), a lift height of the material (118) to be placed at the worksite (112), a target timeline for completion of the worksite plan and the first task and the second task, a total area of the worksite (112), and a distance of hauling the material (118) to the worksite (112);

a compacted volume of the material (118) at the worksite (112);

a dimension of a material-moving element of the first machine (102, 104, 105, 106, 107) and the second machine (102, 104, 105, 106, 107);

the location data obtained from the first machine (102, 104, 105, 106, 107) and the second machine (102, 104, 105, 106, 107);

the first production metric; and

the second production metric.

## Patentansprüche

1. Verfahren (300) mit den Schritten:

Empfangen (302) eines von wenigstens einer ersten Maschine (102, 104, 105, 106, 107) und einer zweiten Maschine (102, 104, 105, 106, 107) an einer Baustelle (112) auszuführenden Baustellenplans durch eine Steuereinrichtung;

Zuweisen (304) der ersten Maschine (102, 104, 105, 106, 107) und der zweiten Maschine (102, 104, 105, 106, 107), um den Baustellenplan zu implementieren, durch die Steuereinrichtung (122), basierend auf den Fähigkeiten der ersten Maschine (102, 104, 105, 106, 107) und der zweiten Maschine (102, 104, 105, 106, 107), wobei:

die erste Maschine (102, 104, 105, 106, 107) eine erste Produktionsmetrik während der Ausführung einer ersten Aufgabe sammelt, und
die zweite Maschine (102, 104, 105, 106, 107) eine zweite Produktionsmetrik, die sich von der ersten Produktionsmetrik unterscheidet, während der Ausführung einer zweiten Aufgabe sammelt, die sich von der ersten Aufgabe unterscheidet;
Empfangen (306, 308), durch die Steuereinrichtung (122), von Maschinentelematikdaten, die die erste Produktionsmetrik definieren, von der ersten Maschine (102, 104, 105, 106, 107) und die die zweite Produktionsmetrik definieren, von der zweiten Maschine (102, 104, 105, 106, 107) innerhalb eines segmentierten Bereichs der Baustelle (112);
Definieren (310), durch die Steuereinrichtung (122), der ersten Produktionsmetrik und der zweiten Produktionsmetrik innerhalb des segmentierten Abschnitts der Baustelle (112) unter Verwendung einer vereinheitlichenden Produktionsmetrik, die einen Prozentsatz der Fertigstellung des Baustellenplans definiert; und
Darstellen (312), durch die Steuereinrichtung (122) und auf einer Benutzerschnittstelle, eines Hinweises auf einen Grad der Fertigstellung des Baustellenplans, basierend auf der vereinheitlichenden Produktionsmetrik.

2. Verfahren (300) nach Anspruch 1, bei dem:

die vereinheitlichende Produktionsmetrik ein Maß für eine Fläche innerhalb des segmentierten Abschnitts der Baustelle (112) auf einer Hubhöhe des segmentierten Abschnitts enthält, und
die Hubhöhe durch eine Tiefe eines in dem segmentierten Abschnitt der Baustelle (112) abgelagerten und verdichteten Materials (118) definiert ist.

3. Verfahren (300) nach Anspruch 1, bei dem der Baustellenplan ein Massenaushubplan ist, der umfasst:

eine Ladeeinheit (104), die ein Material (12) in eine Transporteinheit (106) lädt;
wobei die Transporteinheit (106) das Material (118) auf der durch den Baustellenplan definierten Baustelle (112) ablagert;
eine Materialverteilungseinheit (107), die das Material (118) entlang einer Oberfläche der Baustelle (112) verteilt;
eine Verdichtungseinheit (105), die das Material (118) entlang der Oberfläche der Baustelle (112) verdichtet; und
eine Planiereinheit (107), die eine Neigung des Materials (118) entlang der Oberfläche der Baustelle (112) planiert.

4. Verfahren (300) nach Anspruch 1, bei dem die erste Produktionsmetrik und die zweite Produktionsmetrik mindestens eine der folgenden Größen umfasst: eine Masse von in eine Transporteinheit (106) geladenem Material (118), eine Masse des zu der Baustelle (112) bewegten Materials (118), eine Masse des über die Baustelle (112) verteilten Materials (118) und eine Neigung des Materials (118) entlang der Baustelle (112).

5. Verfahren (300) nach Anspruch 1, bei dem:

die erste Maschine (102, 104, 105, 106, 107) und die zweite Maschine (102, 104, 105, 106, 107) ein und derselbe Maschinentyp sind und in Bezug auf eine Implementierung des Baustellenplans die gleiche Produktionsmetrik verwenden; und
das Verfahren ferner das gemeinsame Berechnen der gleichen Produktionsmetriken des gleichen Maschinentyps (102, 104, 105, 106, 107) als Ganzes umfasst.

6. Verfahren (300) nach Anspruch 1, bei dem die erste Produktionsmetrik und die zweite Produktionsmetrik mindestens eine Abmessung eines Materialbewegungselements der ersten Maschine (102, 104, 105, 106, 107) und der zweiten Maschine (102, 104, 105, 106, 107) sowie von der ersten Maschine (102, 104, 105, 106, 107) und der zweiten Maschine (102, 104, 105, 106, 107) erhaltene Ortsdaten umfassen.

7. Verfahren (300) nach Anspruch 1, das ferner das Empfangen von Benutzereingaben durch die Steuereinrichtung (122) umfasst, einschließlich eines auf die Baustelle (112118) aufzubringenden Materials, das auf der Baustelle (12) zu platzieren ist, eines Zielzeitplans für die Fertigstellung des Baustellenplans und der ersten Aufgabe und der zweiten Aufgabe, einer Gesamtfläche der Baustelle (12) und einer Entfernung für den Transport des Materials (118) zu der Baustelle (112).

8. Verfahren (300) nach Anspruch 7, bei dem die vereinheitlichende Produktionsmetrik zumindest teilweise auf der Grundlage der Benutzereingaben bestimmt wird.

9. Verfahren (300) nach Anspruch 7, bei dem die vereinheitlichende Produktionsmetrik zumindest teilweise auf der Grundlage eines verdichteten Volumens des Materials (118) an der Baustelle (112) bestimmt wird.

10. System (100) mit:

einer Steuereinrichtung (122);
einer auf einer Baustelle (112) betreibbaren ersten Maschine (102, 104, 105, 106, 107);
einer auf der Baustelle (112) betreibbaren zweiten Maschine (102, 104, 105, 106, 107);
einem Kommunikationsnetzwerk (124), das konfiguriert ist, um Signale zwischen der Steuereinrichtung (112) und der ersten Maschine (102, 104, 105, 106, 107) und der zweiten Maschine (102, 104, 105, 106, 107) zu übertragen;
wobei die Steuereinrichtung (122) konfiguriert ist zum:

Empfangen eines von der ersten Maschine (102, 104, 105, 106, 107) und der zweiten Maschine (102, 104, 105, 106, 107) auf der Baustelle (112) auszuführenden Baustellenplans;
Übertragen von Anweisungen an die erste Maschine (102, 104, 105, 106, 107), um eine durch den Baustellenplan definierte erste Aufgabe durchzuführen;
Übertragen von Anweisungen an die zweite Maschine (102, 104, 105, 106, 107), um eine durch den Baustellenplan definierte zweite Aufgabe auszuführen, wobei sich die zweite Aufgabe von der ersten Aufgabe unterscheidet;
Empfangen einer ersten Produktionsmetrik von der ersten Maschine (102, 104, 105, 106, 107) während der Ausführung der ersten Aufgabe;
Empfangen einer zweiten Produktionsmetrik von der zweiten Maschine (102, 104, 105, 106, 107) während der Ausführung der zweiten Aufgabe, wobei sich die zweite Produktionsmetrik von der ersten Produktionsmetrik unterscheidet;
Darstellen, auf einer Benutzerschnittstelle, eines Hinweises auf einen Grad der Fertigstellung des Baustellenplans, basierend auf einer vereinheitlichenden Produktionsmetrik, wobei die vereinheitlichende Produktionsmetrik definiert wird durch zum Erstellen des Baustellenplans verwendete Benutzereingaben, mindestens eine Dimension von Materialbewegungsvorrichtungen der ersten Maschine (102, 104, 105, 106, 107) und der zweiten Maschine (102, 104, 105, 106, 107), von der ersten Maschine (102, 104, 105, 106, 107) während der Ausführung der ersten Aufgabe erhaltene Standortdaten und von der zweiten Maschine (102, 104, 105, 106, 107) während der Ausführung der zweiten Aufgabe erhaltene Standortdaten.

11. System (100) nach Anspruch 10, bei dem die Steuereinrichtung (122) ferner konfiguriert ist, um, wenn die erste Maschine (102, 104, 105, 106, 107) und die zweite Maschine (102, 104, 105, 106, 107) eine gleiche Produktionsmetrik messen, die gleiche Produktionsmetrik, wie sie von der ersten Maschine (102, 104, 105, 106, 107) und der zweiten Maschine (102, 104, 105, 106, 107) empfangen wird, in Bezug auf eine Implementierung des Baustellenplans zusammen als Ganzes zu aggregieren.

12. System (100) nach Anspruch 10, bei dem die erste Maschine (102, 104, 105, 106, 107) und die zweite Maschine (102, 104, 105, 106, 107) eine Ladeeinheit (104) zum Laden von Material (118) in eine Transporteinheit (106), wobei die Transporteinheit (106) konfiguriert ist, um das Material (118) auf der Baustelle (112) abzuladen, eine Materialverteilungseinheit (107) zum Verteilen des Materials (118) entlang einer Oberfläche der Baustelle (112), eine Verdichtungseinheit (105) zum Verdichten des Materials (118) entlang der Oberfläche der Baustelle (112) oder eine Planiereinheit (107) zum Planieren einer Neigung des Materials (118) entlang der Oberfläche der Baustelle (112) umfassen.

13. System (100) nach Anspruch 10, bei dem:

die vereinheitlichende Produktionsmetrik ein Maß für eine Fläche innerhalb eines segmentierten Abschnitts der Baustelle (112) in einer Hubhöhe des segmentierten Abschnitts enthält, und
die Hubhöhe durch eine Tiefe des in dem segmentierten Abschnitt der Baustelle (112) abgelagerten und verdichteten Materials (118) definiert ist.

14. System (100) nach Anspruch 10, bei dem die Steuereinrichtung (122) ferner konfiguriert ist, die vereinheitlichende Produktionsmetrik auf der Grundlage von:

der Benutzereingabe, die ein auf die Baustelle (112) aufzubringendes Material (118), eine Hubhöhe des auf der Baustelle (112) aufzubringenden Materials (118), einen Zielzeitplan für die Fertigstellung des Baustellenplans und der ersten Aufgabe und der zweiten Aufgabe, eine Gesamtfläche der Baustelle (112) und eine Entfernung für den Transport des Materials (118) zur Baustelle (112) umfasst;
einem Volumen von verdichtetem Material (118) an der Baustelle (112);
einer Abmessung eines materialbewegenden Elements der ersten Maschine (102, 104, 105, 106, 107) und der zweiten Maschine (102, 104, 105, 106, 107);
der von der ersten Maschine (102, 104, 105, 106, 107) und der zweiten Maschine (102, 104, 105, 106, 107) erhaltenen Positionsdaten;
der ersten Produktionsmetrik; und
der zweiten Produktionsmetrik zu definieren.

## Revendications

1. Procédé (300), comprenant les étapes ci-dessous consistant à :

recevoir (302), au moyen d'un contrôleur, un plan de chantier devant être exécuté par au moins une première machine (102, 104, 105, 106, 107) et une deuxième machine (102, 104, 105, 106, 107) sur un chantier (112) ;
affecter (304), au moyen du contrôleur (122), la première machine (102, 104, 105, 106, 107) et la deuxième machine (102, 104, 105, 106, 107), pour mettre en oeuvre le plan de chantier sur la base de capacités de la première machine (102, 104, 105, 106, 107) et de la deuxième machine (102, 104, 105, 106, 107), dans lequel :

la première machine (102, 104, 105, 106, 107) collecte une première métrique de production au cours de l'exécution d'une première tâche ; et
la deuxième machine (102, 104, 105, 106, 107) collecte une deuxième métrique de production, différente de la première métrique de production, au cours de l'exécution d'une deuxième tâche différente de la première tâche ;
recevoir (306, 308), au moyen du contrôleur (122), des données télématiques de machines définissant la première métrique de production provenant de la première machine (102, 104, 105, 106, 107) et la deuxième métrique de production provenant de la deuxième machine (102, 104, 105, 106, 107) dans une partie segmentée du chantier (112) ;
définir (310), au moyen du contrôleur (122), la première métrique de production et la deuxième métrique de production dans la partie segmentée du chantier (112), en faisant appel à une métrique de production unificatrice définissant un pourcentage d'achèvement du plan de chantier ; et
présenter (312), au moyen du contrôleur (122), et sur une interface utilisateur, une indication du niveau d'achèvement du plan de chantier, sur la base de la métrique de production unificatrice.

2. Procédé (300) selon la revendication 1, dans lequel :

la métrique de production unificatrice inclut une mesure d'une surface au sein de la partie segmentée du chantier (112) à une hauteur de levage de la partie segmentée ; et
la hauteur de levage est définie par une profondeur d'un matériau (118) déposé et compacté dans la partie segmentée du chantier (112).

3. Procédé (300) selon la revendication 1, dans lequel le plan de chantier est un plan d'excavation de masse incluant :

une unité de chargement (104) chargeant un matériau (112) dans une unité de transport (106) ;
dans laquelle l'unité de transport (106) dépose le matériau (118) sur le chantier (112) défini par le plan de chantier ;
une unité d'étalement de matériau (107) étalant le matériau (118) le long de la surface du chantier (112) ;
une unité de compactage (105) compactant le matériau (118) le long de la surface du chantier (112) ; et
une unité de nivellement (107) nivelant la pente du matériau (118) le long de la surface du chantier (112).

**4.** Procédé (300) selon la revendication 1, dans lequel la première métrique de production et la deuxième métrique de production incluent au moins l'une parmi une masse de matériau (118) chargée dans une unité de transport (106), une masse du matériau (118) déplacée vers le chantier (112), une masse du matériau (118) étalée sur l'ensemble du chantier (112), et un nivellement du matériau (118) le long du chantier (112).

**5.** Procédé (300) selon la revendication 1, dans lequel :

la première machine (102, 104, 105, 106, 107) et la deuxième machine (102, 104, 105, 106, 107) correspondent à un même type de machine et utilisent une même métrique de production connexe à une mise en oeuvre du plan de chantier ; et
le procédé inclut en outre l'étape consistant à calculer les mêmes métriques de production du même type de machine (102, 104, 105, 106, 107) dans leur ensemble.

**6.** Procédé (300) selon la revendication 1, dans lequel la première métrique de production et la deuxième métrique de production incluent au moins l'une des caractéristiques parmi une dimension d'un élément de déplacement de matériau de la première machine (102, 104, 105, 106, 107) et de la deuxième machine (102, 104, 105, 106, 107), et des données de localisation obtenues à partir de la première machine (102, 104, 105, 106, 107) et de la deuxième machine (102, 104, 105, 106, 107).

**7.** Procédé (300) selon la revendication 1, comprenant en outre l'étape consistant à recevoir, au moyen du contrôleur (122), des entrées d'utilisateur incluant un matériau devant être appliqué sur le chantier (112, 118), à placer sur le chantier (112), un échéancier cible pour l'achèvement du plan de chantier et de la première tâche et de la deuxième tâche, une surface totale du chantier (112), et une distance de transport du matériau (118) jusqu'au chantier (112).

**8.** Procédé (300) selon la revendication 7, dans lequel la métrique de production unificatrice est déterminée sur la base, au moins en partie, des entrées d'utilisateur.

**9.** Procédé (300) selon la revendication 7, dans lequel la métrique de production unificatrice est déterminée sur la base, au moins en partie, d'un volume compacté du matériau (118) sur le chantier (112).

**10.** Système (100), comprenant :

un contrôleur (122) ;
une première machine (102, 104, 105, 106, 107) exploitable sur un chantier (112) ;
une deuxième machine (102, 104, 105, 106, 107) exploitable sur le chantier (112) ;
un réseau de communication (124) configuré de manière à transmettre des signaux entre le contrôleur (112) et la première machine (102, 104, 105, 106, 107) et la deuxième machine (102, 104, 105, 106, 107) ;
le contrôleur (122) est configuré de manière à :

recevoir un plan de chantier devant être exécuté par la première machine (102, 104, 105, 106, 107) et la deuxième machine (102, 104, 105, 106, 107) sur le chantier (112) ;
transmettre des instructions à la première machine (102, 104, 105, 106, 107) en vue de mettre en oeuvre une première tâche définie par le plan de chantier ;
transmettre des instructions à la deuxième machine (102, 104, 105, 106, 107) en vue de mettre en oeuvre une deuxième tâche définie par le plan de chantier, la deuxième tâche étant différente de la première tâche ;
recevoir, en provenance de la première machine (102, 104, 105, 106, 107), une première métrique de production, au cours de l'exécution de la première tâche ;
recevoir, en provenance de la deuxième machine (102, 104, 105, 106, 107), une deuxième métrique de production, au cours de l'exécution de la deuxième tâche, la deuxième métrique de production étant différente de la première métrique de production ; et
présenter, sur une interface utilisateur, une indication d'un niveau d'achèvement du plan de chantier sur la base d'une métrique de production unificatrice, la métrique de production unificatrice étant définie par l'entrée d'utilisateur utilisée pour créer le plan de chantier, au moins une dimension de dispositifs de déplacement de matériau de la première machine (102, 104, 105, 106, 107) et de la deuxième machine (102, 104, 105, 106, 107), des données de localisation obtenues à partir de la première machine (102, 104, 105, 106, 107) au cours de l'exécution de la première tâche, et des données de localisation obtenues à partir de la deuxième machine (102, 104, 105, 106, 107) au cours de l'exécution de la deuxième tâche.

**11.** Système (100) selon la revendication 10, dans lequel le contrôleur (122) est en outre configuré de manière à, si la première machine (102, 104, 105, 106, 107) et la deuxième machine (102, 104, 105, 106, 107) mesurent une même métrique de production, agréger la même métrique de production telle que reçue en provenance de la première machine (102, 104, 105, 106, 107) et de la deuxième machine (102, 104, 105, 106, 107), concernant une mise en oeuvre du plan de chantier dans son ensemble.

**12.** Système (100) selon la revendication 10, dans lequel la première machine (102, 104, 105, 106, 107) et la deuxième machine (102, 104, 105, 106, 107) incluent une unité de chargement (104) destinée à charger un matériau (118) dans une unité de transport (106), l'unité de transport (106) étant configurée de manière à déposer le matériau (118) sur le chantier (112), une unité d'étalement de matériau (107) destinée à étaler le matériau (118) le long de la surface du chantier (112), une unité de compactage (105) destinée à compacter le matériau (118) le long de la surface du chantier (112), ou une unité de nivellement (107) destinée à niveler une pente du matériau (118) le long de la surface du chantier (112) .

**13.** Système (100) selon la revendication 10, dans lequel :

la métrique de production unificatrice inclut une mesure d'une surface au sein d'une partie segmentée du chantier (112) à une hauteur de levage de la partie segmentée ; et
la hauteur de levage est définie par une profondeur du matériau (118) déposé et compacté dans la partie segmentée du chantier (112).

**14.** Système (100) selon la revendication 10, dans lequel le contrôleur (122) est en outre configuré de manière à définir la métrique de production unificatrice sur la base de ce qui suit :

l'entrée d'utilisateur incluant un matériau (118) à appliquer au chantier (112), une hauteur de levage du matériau (118) à placer sur le chantier (112), un échéancier cible pour l'achèvement du plan de chantier et de la première tâche et de la deuxième tâche, une surface totale du chantier (112), et une distance de transport du matériau (118) jusqu'au chantier (112) ;
un volume compacté du matériau (118) sur le chantier (112) ;
une dimension d'un élément de déplacement de matériau de la première machine (102, 104, 105, 106, 107) et de la deuxième machine (102, 104, 105, 106, 107) ;
les données de localisation obtenues à partir de la première machine (102, 104, 105, 106, 107) et de la deuxième machine (102, 104, 105, 106, 107) ;
la première métrique de production ; et
la deuxième métrique de production.

**FIG. 1**

**FIG. 2**

EP 4 038 242 B1

300

```
        ┌─────────────┐
        │    START    │
        └─────────────┘
               │
               ▼
┌──────────────────────────────────────┐
│       RECEIVE A WORKSITE PLAN         │── 302
└──────────────────────────────────────┘
               │
               ▼
┌──────────────────────────────────────┐
│  ASSIGN FIRST MACHINE AND SECOND      │── 304
│  MACHINE TO IMPLEMENT WORKSITE PLAN   │
└──────────────────────────────────────┘
               │
               ▼
┌──────────────────────────────────────┐
│      RECEIVE FIRST TELEMATICS DATA    │── 306
└──────────────────────────────────────┘
               │
               ▼
┌──────────────────────────────────────┐
│     RECEIVE SECOND TELEMATICS DATA    │── 308
└──────────────────────────────────────┘
               │
               ▼
┌──────────────────────────────────────┐
│  DEFINE A PERCENTAGE OF COMPLETION    │── 310
│  OF THE WORKSITE PLAN BASED ON A      │
│  UNIFYING PRODUCTION METRIC           │
└──────────────────────────────────────┘
               │
               ▼
┌──────────────────────────────────────┐
│  PRESENT AN INDICATION OF THE         │── 312
│  PERCENTAGE OF COMPLETION OF THE      │
│  WORKSITE PLAN                        │
└──────────────────────────────────────┘
               │
               ▼
        ┌─────────────┐
        │     END     │
        └─────────────┘
```

*FIG. 3*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019080525 A
- US 2018137446 A1
- US 2017342684 A1
- SE 1530129